# EUROPEAN PATENT APPLICATION

(11) **EP 2 658 028 A1**
(43) Date of publication of application: **30.10.2013**
(21) Application number: 11850670.8
(22) Date of filing: 06.10.2011
(51) Int. Cl.: H01M 10/50, H01M 10/48, H02J 7/00

(54) **WARMING APPARATUS**

(30) Priority: 20.12.2010 JP 2010282654
(71) Applicant: Calsonic Kansei Corporation, Saitama-shi Saitama-ken 331-8501 (JP)
(72) Inventor: OTSUKA, Takashi, Saitama-shi Saitama 331-8501 (JP)
(74) Representative: Grünecker, Kinkeldey, Stockmair & Schwanhäusser
(86) International application number: PCT/JP2011/073118
(87) International publication number: WO 2012/086294

(57) **Abstract**

A heating device includes an electrical storage device, a warm-up unit configured to electrically connect to the electrical storage device and warm up the electrical storage device by power supplied from the electrical storage device, and a warm-up control unit configured to set the amount of power suppliable from the electrical storage device to a load by warming up the electrical storage device by the warm-up unit to be larger than the amount of power suppliable from the electrical storage device to the load when the electrical storage device is not warmed up by the warm-up unit.

## Description

### TECHNICAL FIELD

The present invention relates to a heating device.

### BACKGROUND ART

It is disclosed in JP2009-254097A to, in the case of charging an electrical storage device installed in a vehicle using a household power supply, improve charging efficiency of the electrical storage device by performing charging while heating the electrical storage device.

### SUMMARY OF INVENTION

It is known that, if a vehicle is not connected to a power supply and is started in a state where the temperature of an electrical storage device is low, the amount of power suppliable from the electrical storage device decreases. However, a case where the vehicle is not connected to the household power supply, parked outside where temperature is low and started in a state where the temperature of the electrical storage device is low is not considered in the above invention. Thus, the above invention has a problem that, when the vehicle is started in such a state, the amount of power supplied from the electrical storage device decreases and, for example, a running distance of the vehicle becomes shorter.

The present invention was developed to solve such a problem and aims to increase the amount of power of an electrical storage device which starts supplying power in a state where there is no connection to a power supply and the temperature is low.

A heating device according to one aspect of the present invention includes an electrical storage device; a warm-up unit configured to electrically connect to the electrical storage device and to warm up the electrical storage device by power supplied from the electrical storage device; and a warm-up control unit configured to set the amount of power suppliable from the electrical storage device to a load by warming up the electrical storage device by the warm-up unit to be larger than the amount of power suppliable from the electrical storage device to the load when the electrical storage device is not warmed up by the warm-up unit.

According to this aspect, the amount of power suppliable from the electrical storage device to the load by warming up the electrical storage device by the warm-up unit can be set to be larger than the amount of power when the electrical storage device is not warmed up by the warm-up unit and sufficient power can be supplied to the load even if power is supplied in a state where temperature is low.

Embodiments and advantages of the present invention are described in detail below with reference to the accompanying drawings.

### BRIEF DESCRIPTION OF DRAWINGS

FIG. 1 is a schematic block diagram showing a heating device of a first embodiment,
FIG. 2 is a flow chart showing a control of the heating device of the first embodiment,
FIG. 3 is a map showing a relationship of an SOC of a battery, battery temperature and a pre-warm-up battery power amount,
FIG. 4 is a map showing a relationship of the SOC of the battery, battery usage time and the amount of battery deterioration,
FIG. 5 is a map showing a relationship of a deviation between target temperature and present temperature and the amount of power consumed by a temperature regulator, and
FIG. 6 is a flow chart showing a control of a heating device of a second embodiment.

### EMBODIMENTS OF INVENTION

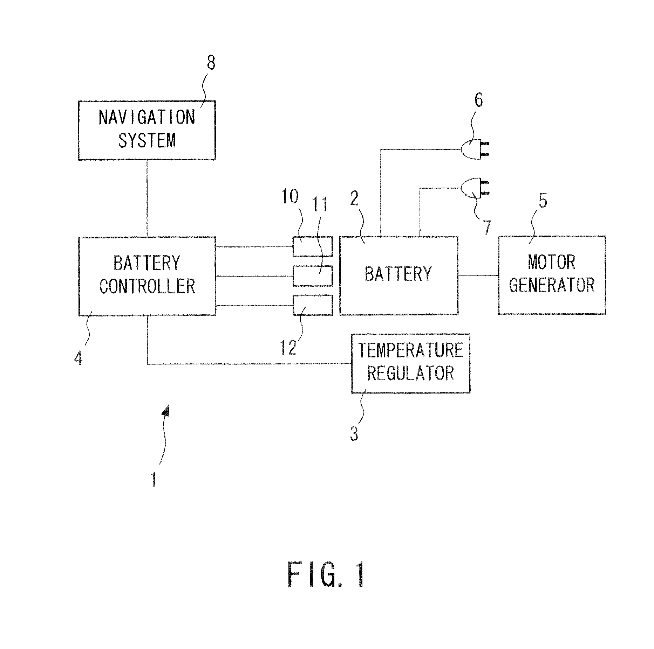

A heating device 1 of a first embodiment of the present invention is described using FIG. 1.

FIG. 1 is a schematic block diagram showing a part of a vehicle including the heating device. The vehicle is capable of generating drive power by motor generator using power supplied from a battery and running using that drive power. It should be noted that although the heating device installed in the vehicle is described in this embodiment, there is no limitation to this and the heating device can be used for other portable power supply devices.

The heating device 1 includes a battery 2, a temperature regulator 3 and a battery controller 4.

The battery 2 stores power to be supplied to a motor generator 5 and the like. The battery 2 is charged using a quick charging connector 6 or a normal charging connector 7 and also charged by the motor generator 5 such as at the time of regenerating the vehicle.

The temperature regulator 3 is a heater for warming the battery 2.

The battery controller 4 outputs a control signal for the temperature regulator 3 based on a signal from a temperature sensor 10 for detecting the temperature of the battery 2, a signal from a voltage sensor 11 for detecting the voltage of the battery 2, a signal from a current sensor 12 for detecting the current of the battery 2, a signal from a navigation system 8 and the like. The battery controller 4 calculates a charging rate (state of charge; hereinafter, referred to as an SOC) of the battery 2 based on the signal from the voltage sensor 11 and that from the current sensor 12.

The battery controller 4 is configured by a CPU, a ROM, a RAM and the like and fulfills its functions by the CPU executing a program stored in the ROM.

The navigation system 8 displays a route to a destination, a present location, traffic information, surrounding information, terrain and the like based on a GPS signal when the destination is entered by the operation of a driver.

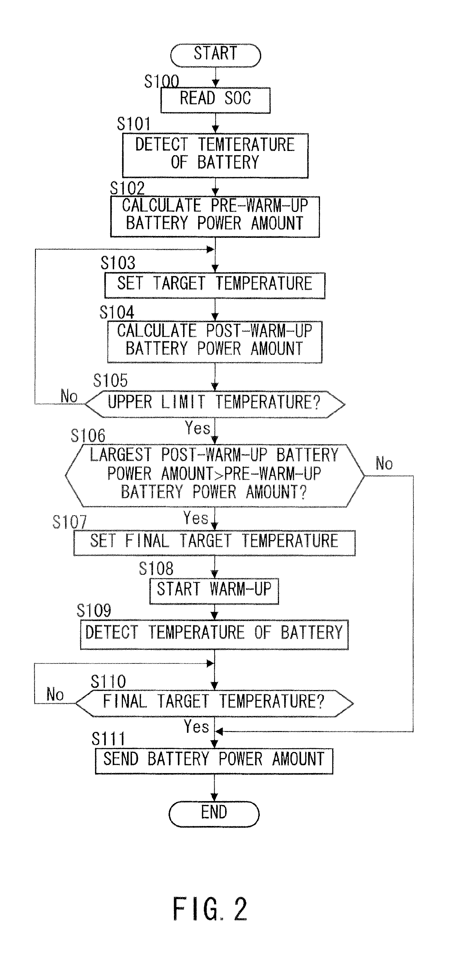

Next, a control of the heating device in this embodiment is described using a flow chart of FIG. 2.

In Step S 100, the battery controller 4 reads the SOC of the battery 2. The SOC of the battery 2 was stored when a vehicle switch was turned off last time.

In Step S101, the battery controller 4 detects the temperature of the battery 2 based on a signal of the temperature sensor 10.

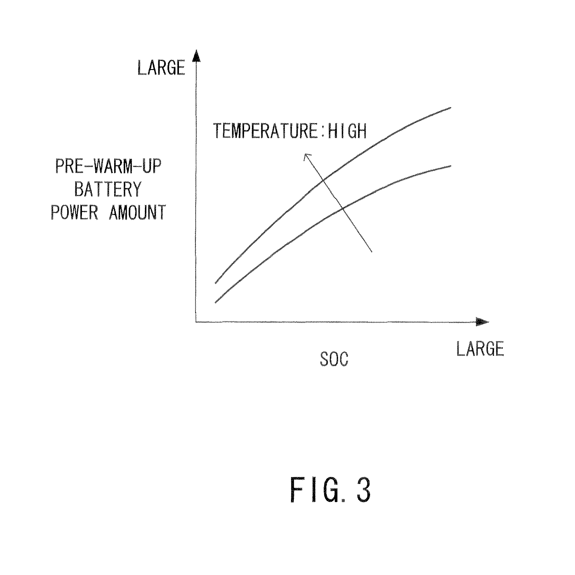

In Step S102, the battery controller 4 calculates the amount of power which can be currently output by the battery 2 (hereinafter, referred to as a pre-warm-up battery power amount (first amount of power)) from the SOC of the battery 2 and the temperature of the battery 2 based on a map of FIG. 3. FIG. 3 is the map showing a relationship of the SOC of the battery 2, the temperature of the battery 2 and the pre-warm-up battery power amount. As the SOC of the battery 2 increases, the pre-warm-up battery power amount increases. Further, as the temperature of the battery 2 increases, the pre-warm-up battery power amount increases.

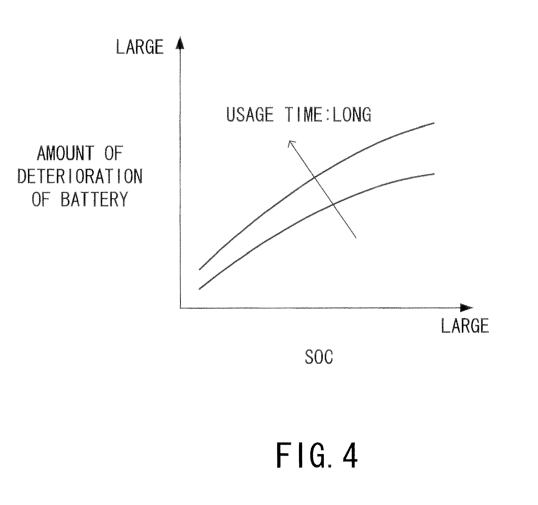

Further, battery performance is deteriorated as the battery 2 is used for long time. Thus, the amount of deterioration of the battery 2 may be calculated based on a map shown in FIG. 4 and the pre-warm-up battery power amount calculated in FIG. 3 may be corrected. FIG. 4 shows a relationship of the SOC of the battery 2, the usage time of the battery 2 and the amount of deterioration of the battery 2. The amount of deterioration of the battery 2 increases as the battery 2 is used for long time. That is, the pre-warm-up battery power amount decreases. In the case of correcting the pre-warm-up battery power amount, the pre-warm-up battery power amount is calculated by subtracting the amount of deterioration of the battery 2 calculated using the map of FIG. 4 from the pre-warm-up battery power amount calculated using the map of FIG. 3.

In Step S103, the battery controller 4 sets a target temperature of the battery 2 to be warmed by the temperature regulator 3. Here, the target temperature is set at a temperature higher than the presently set target temperature by a predetermined temperature. The first target temperature in this control is a temperature higher than the temperature of the battery 2 detected in Step S101 by a predetermined temperature. It should be noted that although the predetermined temperature is 1°C in this embodiment, there is no limitation to this and may be larger or smaller than 1 °C.

In Step S104, the battery controller 4 calculates the amount of battery power usable in the case of warming the battery 2 (hereinafter, referred to as a post-warm-up battery power amount (second amount of power)) by the temperature regulator 3 based on the SOC of the battery 2, the temperature of the battery 2 and the like based on Equation (1).

Post-warm-up battery power amount = P1+P2-P3 ... (1)

P1 denotes the amount of power in the case of heating by the temperature regulator 3. P2 is the amount of power which is increased by the self-heat generation of the battery 2 before the battery 2 is heated. P3 is the amount of power consumed by the temperature regulator 3.

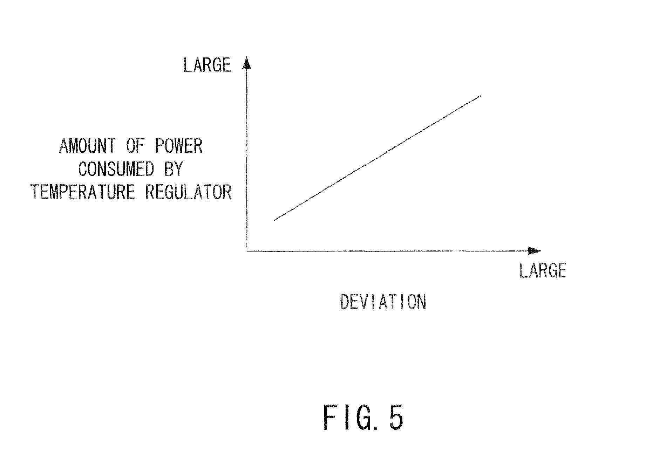

P1 is calculated using the map shown in FIG. 3. P2 is calculated based on the current, the voltage and the internal resistance of the battery 2. P3 is calculated using a map shown in FIG. 5. FIG. 5 is the map showing a relationship of a deviation between the target temperature and the present temperature of the battery 2 and the amount of power consumed by the temperature regulator 3. The amount of power consumed by the temperature regulator 3 increases as the deviation increases.

It should be noted that, similarly to the pre-warm-up battery power amount, the post-warm-up battery power amount may be corrected using the amount of deterioration calculated based on the usage time of the battery 2. A correction method is similar to that for the pre-warm-up battery power amount.

In Step S105, the battery controller 4 determines whether or not the target temperature is an upper limit temperature of the battery 2. Step S106 follows if the target temperature is the upper limit temperature of the battery 2, whereas a return is made to Step S103 to repeat the above control if the target temperature is not the upper limit temperature of the battery 2. In this embodiment, target temperatures of the battery 2 are set up to the upper limit temperature and the post-warm-up battery power amount is calculated for each set target temperature.

In Step S106, the battery controller 4 compares the pre-warm-up battery power amount calculated in Step S102 and the largest post-warm-up battery power amount among the post-warm-up battery power amounts calculated for each target temperature. Step S107 follows if the largest post-warm-up battery power amount is larger than the pre-warm-up battery power amount, whereas Step S111 follows if the largest post-warm-up battery power amount is not larger than the pre-warm-up battery power amount.

In Step S107, the battery controller 4 sets the temperature of the battery 2, at which the largest post-warm-up battery power amount can be obtained, as a final target temperature.

In Step S 108, the battery controller 4 starts the warm-up of the battery 2 by the temperature regulator 3.

In Step S109, the battery controller 4 detects the temperature of the battery 2 based on a signal of the temperature sensor 10.

In Step S110, the battery controller 4 determines whether or not the temperature of the battery 2 detected in Step S109 has reached the final target temperature set in Step S107. If the temperature of the battery 2 has reached the final target temperature, the warm-up is finished and Step S111 follows.

In Step S111, the battery controller 4 sends battery power amount data to an integrated controller (not shown).

Effects of the first embodiment of the present invention are described.

By warming up the battery 2 by the temperature regulator 3, the post-warm-up battery power amount suppliable from the battery 2 to the motor generator 5 can be made larger than the pre-warm-up battery power amount when the battery 2 is not warmed up by the temperature regulator 3. Thus, it is possible to increase the amount of power that can be supplied from the battery 2 to the motor generator 5 and extend the running distance of the vehicle when the vehicle is not connected to a charging facility and is started in a state where temperature is low.

It is possible to suppress the amount of power consumed by the temperature regulator 3, increase the amount of power suppliable from the battery 2 to the motor generator 5 and extend the running distance of the vehicle by warming up the battery 2 by the temperature regulator 3, if the post-warm-up battery power amount suppliable from the battery 2 to the motor generator 5 by warming up the battery 2 by the temperature regulator 3 is larger than the pre-warm-up battery power amount suppliable from the battery 2 to the motor generator 5 when the battery 2 is not warmed up by the temperature regulator 3.

When the battery 2 is warmed up by the temperature regulator 3, a plurality of target temperatures of the battery 2 are set, the post-warm-up battery power amounts are calculated for each set target temperature, the largest post-warm-up battery power amount among them and the pre-warm-up battery power amount are compared, and the temperature at which the largest post-warm-up battery power amount is reached is set as the final target temperature if the largest post-warm-up battery power amount is larger than the pre-warm-up battery power amount. Then, the battery 2 is warmed up by the temperature regulator 3 so as to reach the final target temperature. Thus, a maximum amount of power suppliable by the battery 2 can be supplied to the motor generator 5 and the running distance of the vehicle can be extended.

Next, a second embodiment of the present invention is described.

Since the configuration of this embodiment is the same as the first embodiment, it is not described here.

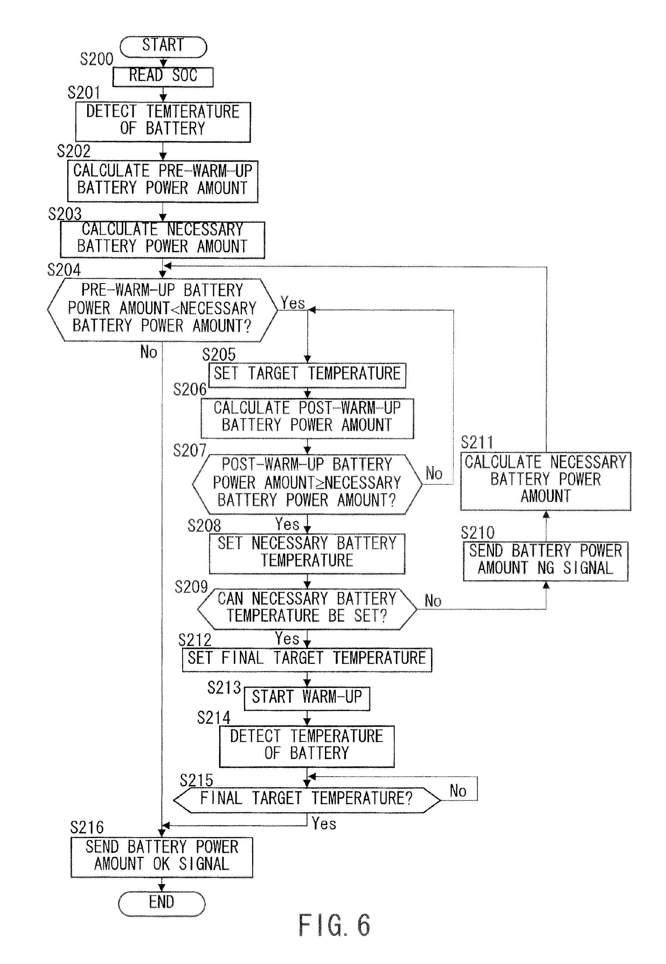

Next, a control of a heating device in this embodiment is described using a flow chart of FIG. 6. Here, it is assumed that a driver sets a destination using a navigation system 8.

Since a control in Steps S200 to S202 is the same as that in Steps S 100 to S102, it is not described here.

In Step S203, a battery controller 4 calculates the amount of battery power necessary until the vehicle reaches the destination (hereinafter, referred to as a necessary battery power amount (amount of required power)) based on a signal from the navigation system 8. That is, the battery controller 4 calculates the amount of power required by the battery 2 to drive to the destination.

In Step S204, the battery controller 4 compares a pre-warm-up battery power amount and the necessary battery power amount. Step S205 follows if the pre-warm-up battery power amount is smaller than the necessary battery power amount, whereas Step S216 follows if the pre-warm-up battery power amount is not smaller than the necessary battery power amount.

Since a control in Steps S205 and S206 is the same as that in Steps S103 and S104, it is not described here.

In Step S207, the battery controller 4 compares a post-warm-up battery power amount and the necessary battery power amount. Step S208 follows if the post-warm-up battery power amount is not smaller than the necessary battery power amount, whereas a return is made to Step S205 to repeat the above control if the post-warm-up battery power amount is smaller than the necessary battery power amount.

In Step S208, the battery controller 4 sets a target temperature as a necessary battery temperature. That is, the necessary battery temperature is a minimum temperature at which the necessary battery power amount can be obtained by warming up the battery 2.

In Step S209, the battery controller 4 determines whether or not the necessary battery temperature can be set. That is, it is determined whether or not the necessary battery temperature is lower than an upper limit temperature of the battery 2. Step S210 follows if the necessary battery temperature cannot be set, whereas Step S212 follows if the necessary battery temperature can be set.

In Step S210, the battery controller 4 sends a battery power amount NG signal to the navigation system 8.

When the navigation system 8 displays charging facilities near the vehicle and the driver selects a charging facility, the battery controller 4 calculates a necessary battery power amount necessary for the vehicle to reach the selected charging facility anew based on a signal from the navigation system 8 in Step S211. Then, a return is made to Step S204 and the above control is repeated based on the new destination and the new necessary battery power amount.

In Step S212, the battery controller 4 sets the necessary battery temperature as a final target temperature.

In Step S213, the battery controller 4 starts the warm-up of the battery 2 by a temperature regulator 3.

In Step S214, the battery controller 4 detects the temperature of the battery 2 based on a signal of a temperature sensor 10.

In Step S215, the battery controller 4 determines whether or not the temperature of the battery 2 has reached the final target temperature. Step S216 follows if the temperature of the battery 2 has reached the final target temperature.

In Step S216, the battery controller 4 sends a battery power amount OK signal to the integrated controller.

Effects of the second embodiment of the present invention are described.

The battery 2 is warmed up by the temperature regulator 3 if the pre-warm-up battery power amount is smaller than the necessary battery power amount required by the battery 2 and the post-warm-up battery power amount is not smaller than the necessary battery power amount. Since the battery 2 is warmed up by the temperature regulator 3 only when the battery 2 needs to be warmed up by the temperature regulator 3, useless battery consumption can be suppressed and the battery 2 can be efficiently used.

In the case of warming up the battery 2 by the temperature regulator 3, the warm-up of the battery 2 by the temperature regulator 3 can be suppressed to a minimum level by warming up the battery 2 until the temperature of the battery 2 reaches the necessary battery temperature (final target temperature) at which the necessary battery power amount can be supplied. Further, by suppressing the warm-up of the battery 2 to the minimum level, a time required for the warm-up can be shortened and the vehicle can be quickly started.

It should be noted that a signal representing the post-warm-up battery power amount may be output to the navigation system 8 in the second embodiment. This enables the driver to set a reachable charging facility by one operation.

The present invention is not limited to the above embodiments. It goes without saying that the present invention includes various changes and improvements which can be made within the scope of the technical idea of the present invention.

The present application claims a priority based on Japanese Patent Application No. 2010-282654 filed with the Japan Patent Office on December 20, 2010, all the contents of which are hereby incorporated by reference.

## Claims

1. A heating device, comprising:
an electrical storage device;
warm-up means configured to electrically connect to the electrical storage device and warm up the electrical storage device by power supplied from the electrical storage device; and
warm-up control means configured to set the amount of power suppliable from the electrical storage device to a load by warming up the electrical storage device by the warm-up means to be larger than the amount of power suppliable from the electrical storage device to the load when the electrical storage device is not warmed up by the warm-up means.

2. The heating device according to claim 1, comprising:
state of charge detection means configured to detect a state of charge of the electrical storage device;
temperature detection means configured to detect a temperature of the electrical storage device;
first amount of power calculation means configured to calculate a first amount of power suppliable from the electrical storage device to the load based on the state of charge of the electrical storage device and the temperature of the electrical storage device when the electrical storage device is not warmed-up by the warm-up means; and
second amount of power calculation means configured to calculate a second amount of power suppliable from the electrical storage device to the load when the electrical storage device is warmed up by the warm-up means;
wherein the warm-up control means is configured to cause the warm-up means to warm-up the electrical storage device when the second amount of power is larger than the first amount of power.

3. The heating device according to claim 2, wherein:
the second amount of power calculation means is configured to set a plurality of target temperatures of warm-up by the warm-up means and calculate the second amount of power for each of the set target temperatures; and
the warm-up control means is configured to compare a maximum value among the second amounts of power calculated for each of the target temperatures and the first amount of power.

4. The heating device according to claim 1, comprising:
state of charge detection means configured to detect a state of charge of the electrical storage device;
temperature detection means configured to detect a temperature of the electrical storage device;
first amount of power calculation means configured to calculate a first amount of power suppliable from the electrical storage device to the load based on the state of charge of the electrical storage device and the temperature of the electrical storage device when the electrical storage device is not warmed-up by the warm-up means;
second amount of power calculation means configured to calculate a second amount of power suppliable from the electrical storage device to the load when the electrical storage device is warmed up by the warm-up means; and
third amount of power calculation means configured to calculate a third amount of power required by the electrical storage device;
wherein the warm-up control means is configured to cause the warm-up means to warm-up the electrical storage device when the first amount of power is smaller than the third amount of power and the second amount of power is not smaller than the third amount of power.

5. The heating device according to claim 4, wherein:
the warm-up control means is configured to cause the warm-up means to warm-up the electrical storage device until the electrical storage device reaches a temperature at which the third amount of power is suppliable.
